**Europäisches Patentamt**

(19) **European Patent Office**

**Office européen des brevets**

(11) Veröffentlichungsnummer: **0 187 222**

**B1**

# (12) EUROPÄISCHE PATENTSCHRIFT

(45) Veröffentlichungstag der Patentschrift:
25.01.89

(21) Anmeldenummer: **85114328.9**

(22) Anmeldetag: **11.11.85**

(51) Int. Cl.⁴: **A 61 C 1/00**

(54) Ventilsteuereinrichtung für ein zahnärztliches Gerät.

(30) Priorität: **23.11.84 DE 3442846**

(43) Veröffentlichungstag der Anmeldung:
**16.07.86 Patentblatt 86/29**

(45) Bekanntmachung des Hinweises auf die Patenterteilung:
**25.01.89 Patentblatt 89/4**

(84) Benannte Vertragsstaaten:
**AT CH DE FR GB IT LI SE**

(56) Entgegenhaltungen:
**DE-A-2 417 955**
**FR-A-2 281 097**
**US-A-4 033 550**
**US-A-4 230 452**

(73) Patentinhaber: **Siemens Aktiengesellschaft Berlin und München, Wittelsbacherplatz 2, D-8000 München 2 (DE)**

(72) Erfinder: **Kratochwilla, Hans- Michael, Ziegelhüttenstrasse 6, D-6143 Lorsch (DE)**

EP 0 187 222 B1

## Beschreibung

Die Erfindung bezieht sich auf eine Ventilsteuereinrichtung für ein zahnärztliches Gerät.

Bei medizinischen, insbesondere zahnmedizinischen, Geräten werden zur Steuerung des Medienflusses (Luft und/oder Wasser) Stößel- oder Membranventile eingesetzt. Bei letzteren ist zwischen zwei Ventilkörperteilen eine Membrane eingespannt, welche bei Beaufschlagung auf der einen Seite mit einem Steuermedium, z. B. Luft, zwei auf der anderen Membranseite vorher durch die Membrane versperrte, mit Zu- und Ableitungen des zu steuernden Mediums, z. B. Wasser, verbundene Öffnungen freigibt (US-A-3 918 161, US-A-4 136 450).

Solche Membranventile sind relativ anfällig gegen Verklebungen sowie Ablagerungen im Ventilsitzbereich, wodurch unter Umständen sehr rasch die erforderliche Dichtheit bei geschlossenem Ventil nicht mehr gegeben ist und damit die Betriebssicherheit der Ventilsteuereinrichtung beeinträchtigt ist. Dies gilt auch für die zuerst genannten Stößelventile bzw. für kombinierte Membrane/Stößelventile, insbesondere bei Einsatz zur Steuerung von wässrigen Medien, weil hier besonders die Gefahr besteht, daß Teile des Ventils, wie Stößel, Druckfedern etc., durch Korrosion zu einem vorzeitigen Ausfall der Ventilsteuereinrichtung führen.

Eine Ventilanordnung nach dem Oberbegriff des Anspruchs 1 mit Stößelventilen ist beispielsweise aus der FR-A-2 281 097 bekannt. Diese Ventilanordnung dient dazu, die Versorgungsmedien für druckluftangetriebene zahnärztliche Handstücke von Hand steuern zu können. Hierzu sind im Bereich des Benutzers des Handstückes auf Druckeinwirkung ansprechende Elemente in Form z. B. einer am Handgriff angeordneten elastischen elastischen Kammer vorgesehen. Ein auf die elastische Kammer ausgeübter Druck wird auf eine Ventilanordnung mit mehreren druckluftbeaufschlagten Stößelventilen übertragen, mit der der Medienfluß zu den Handstücken direkt gesteuert werden kann. Die Ventilanordnung besteht in einer dargestellten Ausführungsform aus einem in einem Ventilgehäuseblock verstellbar angeordneten Kolbenstange, die am einen Ende federbelastet und am anderen Ende durch einen druckluftbeaufschlagten Balg im Gehäuseblock abgestützt ist. Die Kolbenstange enthält zwei Ventilkolben, die durch eine Bypaßstange mit wesentlich kleinerem Durchmesser als die Kolben miteinander verbunden sind. Quer zur Verstellrichtung der Kolbenstange sind Ein- und Auslaßstutzen für die zu steuernden Medien angeordnet. Bei auf die elastische Kammer im Bereich des Handgriffes ausgeübtem Druck dehnt sich der Balg allmählich aus, so daß die Kolbenstange mit den beiden Kolben entgegen der Federkraft verstellt wird. Durch die Verstellung wird die zunächst geschlossene Einlaßöffnung geöffnet, während der Auslaßstutzen noch geschlossen bleibt. Bei weiterer Verstellung wird schließlich auch der Ausgangsstutzen freigegeben. Wird der Kolben noch weiter verstellt, wird ein weiterer Austrittsstutzen zur Steuerung des Medienflusses eines weiteren Mediums freigegeben.

Eine solche Stößelventilanordnung ist insbesondere, wenn sehr viele Medien gleichzeitig zur steuern sind, fertigungstechnisch aufwendig, insbesondere wegen der vielen im Gehäuseblock vorzusehenden Bohrungen, der vorzusehenden Passungen für die Führung der Kolbenstange sowie im Hinblick auf die Abdichtung der Kolben gegenüber den Ein- und Auslaßstutzen. Weiterhin sind bei dieser Ventilanordnung die oben bereits erwähnten Nachteile bezüglich Korrosion bei Steuerung von wässrigen Medien gegeben.

Der im Anspruch 1 angegebenen Erfindung liegt die Aufgabe zugrunde, eine Ventilsteuereinrichtung anzugeben, mit der sich u.a. die oben erwähnten Nachteile vermeiden lassen, die also besonders betriebssicher und darüber hinaus auch lageunabhängig arbeitet; letzteres ist beispielsweise von Bedeutung, wenn ein Ventil in ein bewegliches Gerät, z. B. in ein Handinstrument od. dgl., eingebaut wird, wo man keine Rücksicht auf eine bestimmte Einbaulage nehmen kann.

Wesentliche Vorteile der erfindungsgemäßen Ventilsteuereinrichtung sind, daß getrennte Wege für mehrere Medien über eine Ventilanordnung auf einfache und sichere Weise gesteuert werden können. Die aus keramischem Werkstoff gebildeten Ventilkörper sind extrem korrosionsbeständig, haben keine chemische Affinität zu den durch die Leitungswege hindurchströmenden Medien und neigen nicht zum Verkleben oder Verschmutzen. Durch die Relativbewegung von Stellkörper und Grundkörper, die als Längsbewegung oder Verdrehung ausgebildet sein kann, ist u.a. ein guter Selbstreinigungseffekt gegeben.

Besonders Vorteilhaft ist es, die Ventile als Flachschieberventile auszubilden, wobei jedes Ventil aus einem Paket von drei übereinandergelagerten Platten aus keramischem Werkstoff besteht, von denen die obere und untere Platte feststehend angeordnet sind und die mittlere Platte in einem Rahmen gefaßt ist, der durch geeignete Verstellmittel, die manueller, pneumatischer, hydraulischer oder elektromechanischer Art sein können, verstellbar ist. Die Abdichtung zwischen den Platten erfolgt über hochfeine Gleitflächen. Sämtliche Platten haben vorteilhafterweise gleiches Lochbild, wobei jedes Ventil bis zu fünf Kanäle gleichzeitig öffnen und schließen kann.

Besonders vorteilhaft ist es, solche Flachschieberventile zur Steuerung des Medienflusses mehrerer zahnärztlicher Instrumente vorzusehen, wobei für diesen Anwendungsfall es vorteilhaft sein kann, die Ventile in einem gemeinsamen Ventilblockgehäuse anzuordnen und hierzu ein für sämtliche Instrumente gemeinsames Eingangsschieberventil vorzusehen und für jedes Instrument je ein Ausgangsschieberventil. Die Ventile sind vorteilhafterweise in einem sandwichartig aufgebauten Ventilblockgehäuse untergebracht, welches im wesentlichen aus zwei Gehäuseteilen besteht, einem oberen Ventilblockgehäuse, in dem die Medienzuleitung und die Leitungskanäle zur Verteilung der Medien zu den einzelnen Ventilen angeordnet sind, und einem unteren Gehäuseblockteil, der die von den Ventilen wegführenden Leitungen für die Anschlußarmaturen für die zu den einzelnen Instrumenten führenden Versorgungsschläuche enthält.

Weitere Ausgestaltungen und Weiterbildungen der Erfindung werden an einem Ausführungsbeispiel der Erfindung anhand der Zeichnung näher erläutert.

Es zeigen:

Figur 1 einen zahnärztlichen Arbeitsplatz in schaubildlicher Ansicht,
Figur 2 das in Figur 1 gezeigte Arztgerät in Rückansicht,
Figur 3 die Ventilsteuereinrichtung in einer Explosionsdarstellung,
Figuren 4/5 einen Teil der Ventilsteuereinrichtung im Schnitt in zwei verschiedenen Ventilstellungen,
Figur 6 eine Darstellung des Medienverlaufs für ein Instrument.

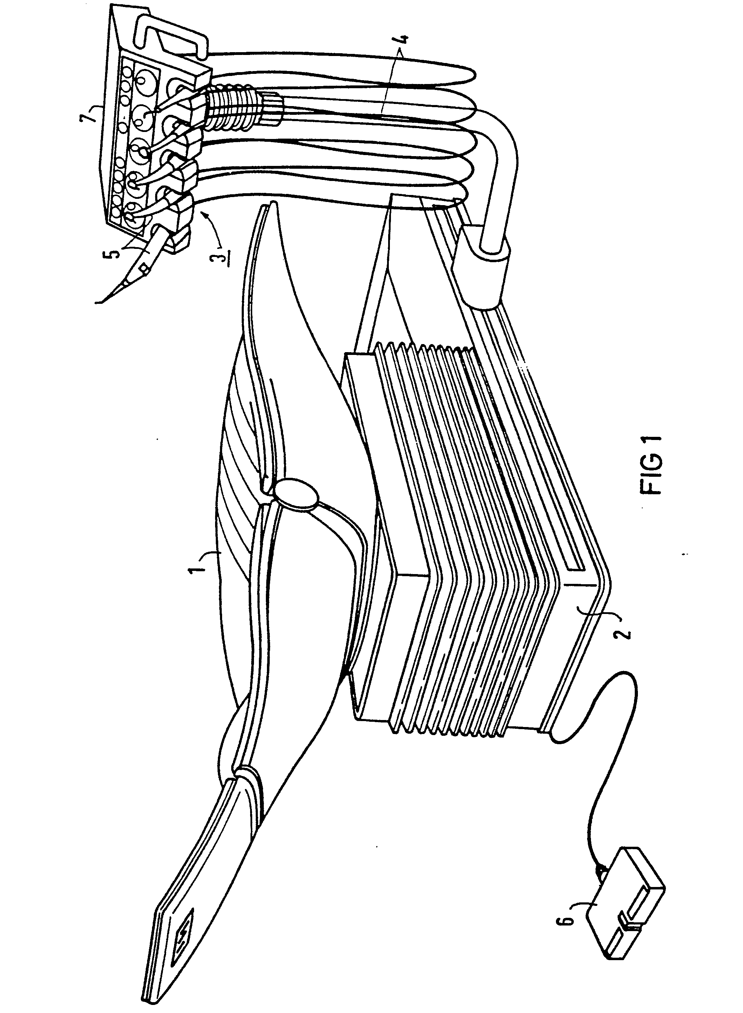

Die Figur 1 zeigt in einer schaubildlichen Darstellung einen zahnärztlichen Arbeitsplatz, enthaltend einen zahnärztlichen Patientenstuhl 1 und ein im Stuhlsockel 2 des Patientenstuhles längs verschiebbar gehaltertes Arztgerät 3. Das Arztgerät 3 enthält in nicht näher bezeichneten Ablagen gehalterte, an Versorgungsleitungen 4 gebundene Instrumente 5. Mit 6 ist ein Fußschalter bezeichnet, mit dem bestimmte Funktionen für die Instrumente ausgelöst werden können, wie z. B. das Ein- und Ausschalten der den Instrumenten zugeordneten Antriebe (Luft-, Elektromotor) oder das An- und Abschalten von Kühlmedien, welche von den Instrumenten abgegeben werden.

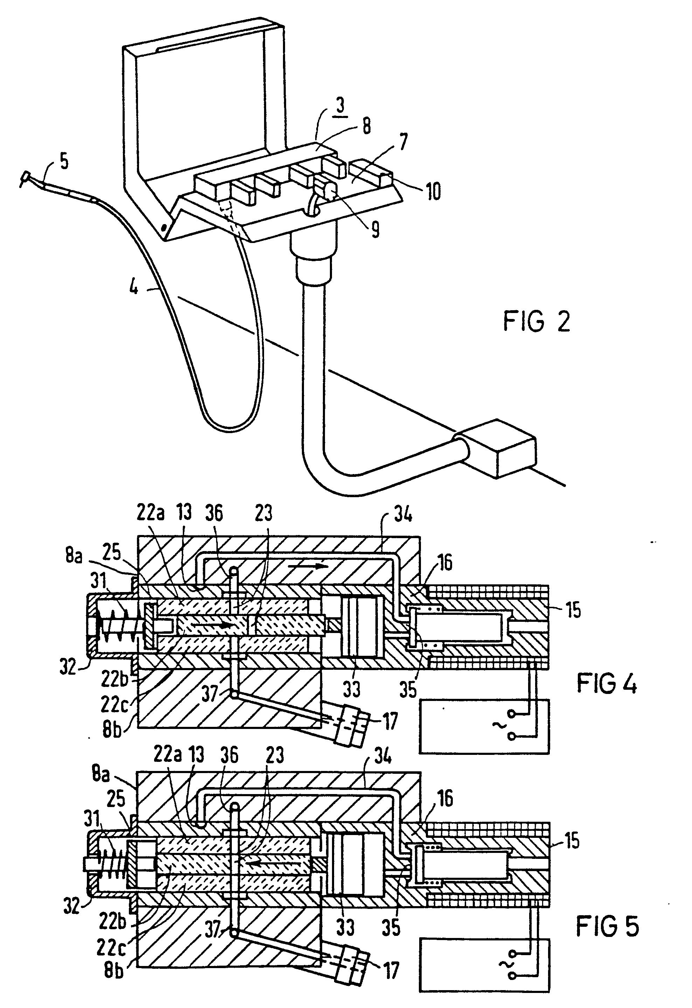

Das die Instrumente 5 in den erwähnten Ablagen aufnehmende Gerätegehäuse 7 ist in Figur 2 von der Rückseite und in aufgeklapptem Zustand dargestellt. Es enthält in seinem Inneren einen allgemein mit 8 bezeichneten Ventilsteuerblock, einen Kupplungskörper 9 und eine elektrische Heizeinrichtung 10, mit der in bekannter Weise die Medien bei Bedarf erwärmt werden können.

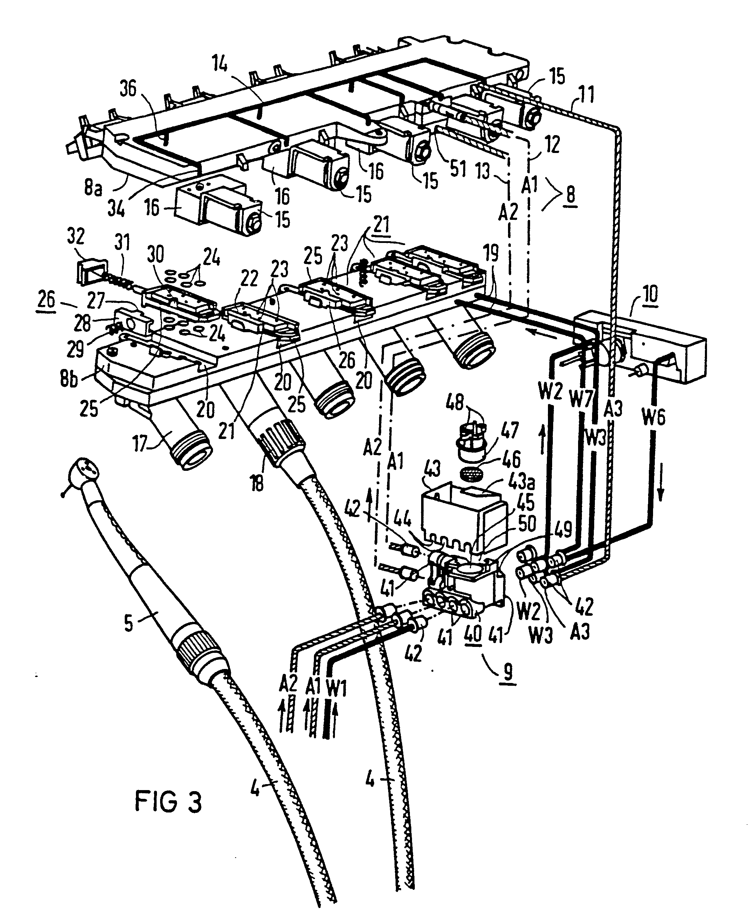

Die Figur 3 zeigt den Ventilsteuerblock 8, den Kupplungskörper 9 und die Heizeinrichtung 10 in einer Explosionsdarstellung, aus der der Aufbau der für die Erfindung wesentlichen Teile gut erkennbar ist. Der Medienfluß ist in der Darstellung für Wasser mit durchgezogenen Linien, für Luft mit schraffierten Linien angegeben und durch die Kurzzeichen W für Wasser und A für Luft gekennzeichnet.

Der Ventilsteuerblock 8 besteht im wesentlichen aus zwei jeweils aus zwei Platten gebildeten Gehäuseteilen, einem oberen Gehäuseteil 8a und einem unteren Gehäuseteil 8b. Im oberen Gehäuseteil 8a enden Zuleitungen 11, 12 und 13 für einerseits chip blower-Luft 11, Treifluft 12 und Steuerluft 13. Die Verteilung der über die Leitungen 11 und 12 eingespeisten Medien zu diversen Ventilen 15 und 21, die nachfolgend noch näher beschrieben werden, erfolgt über mit 14 bezeichnete Kanäle und Bohrungen, die in bekannter Weise in den Platten eingearbeitet sind oder durch diese gebildet werden. Die mit 15 bezeichneten Ventile sind Magnetventile, welche am oberen Gehäuseteil 8a angeflanscht und jeweils mit einer Pneumatiksteuereinrichtung 16 gekoppelt sind. Das untere Gehäuseteil 8b enthält einerseits angeformte Anschlußstutzen 17 für den Anschluß der Schlaucharmaturen 18 der Versorgungsleitungen 4 der Instrumente 5, andererseits Anschlüsse 19 für Wasserleitungen W3 und W7 (kaltes Sprawasser und warmes Spraywasser). An der Oberseite des Gehäuseteils 8b sind fünf quer zur Längsausdehnung verlaufende Nuten 20 vorgesehen, in die Ventile 21 teilweise eingesenkt angeordnet sind. Entsprechende Nuten sind auch auf der Unterseite des oberen Gehäuseteils 8a angeordnet, so daß im montierten Zustand der beiden Gehäuseteile 8a, 8b die miteinander korrespondierenden Planflächen bündig aneinanderliegen können.

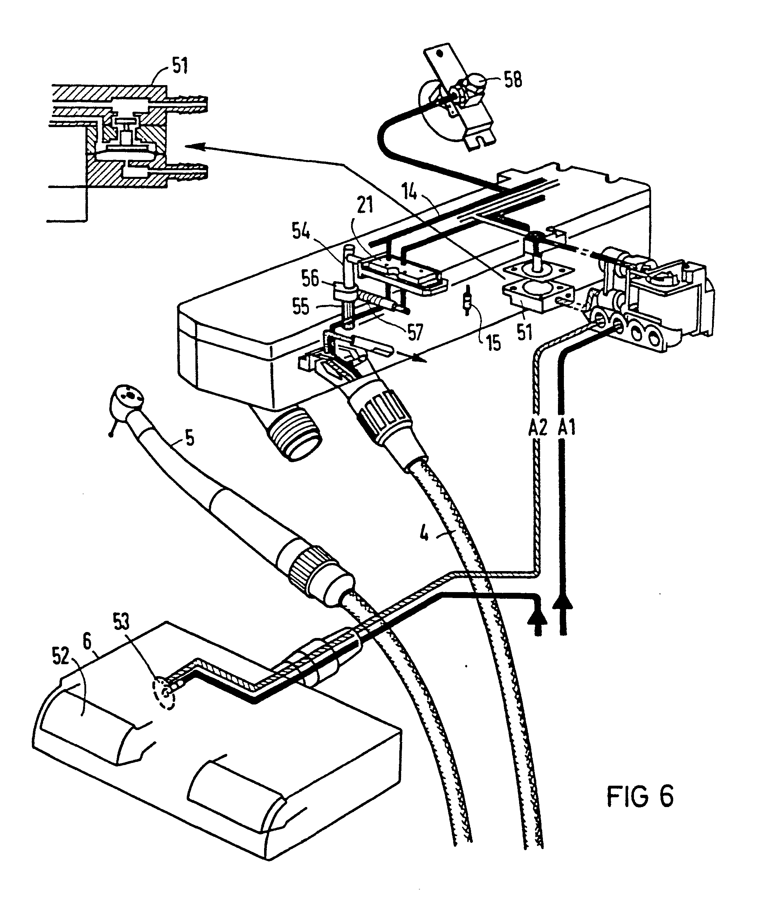

Die Ventile 21 sind Schieberventile. Jedes Schieberventil besteht aus einem Paket von drei übereinander angeordneten Keramikscheiben 22a, 22b, 22c (Fig 4 und 5), die im vorliegenden Ausführungsbeispiel als relativ dünne, im Querschnitt rechteckige Platten ausgebildet sind Jede der drei Keramikscheiben 22a, 22b, 22c enthält an gleicher Stelle fünf versetzt angeordnete Durchgangsbohrungen 23, so daß jede Platte das gleiche Lochbild hat. Die einzelnen Bohrungen 23 sind unter Zwischenlage von Dichtringen 24 gegeneinander abgedichtet, wobei die Dichtringe lediglich zwischen den oberen Keramikscheiben 22a und den Planflächen der Nuten im oberen Gehäuseteil 8a und zwischen den unteren Keramikscheiben 22c und den Planflächen der Nuten 21 im unteren Gehäuseteil 8b vorgesehen sind. Die Abdichtung zwischen den Keramikscheiben erfolgt alleine durch hochfeine Gleitflächen. Die Dichtringe sind geringfügig stärker gewählt als der für ihre Halterung vorgesehene Zwischenraum, wodurch die Scheiben "schwimmend" zwischen den Gehäuseteilen angeordnet sind. Die Dichtringe erfüllen dadurch neben ihrer Abdichtfunktion noch die Aufgabe, einen gewissen Anpreßdruck auf die Gleitflächen der Scheiben auszuüben.

Während die mittlere Keramikscheibe 22b in einem Rahmen 25 gefaßt ist, werden die beiden oberen und unteren Keramikscheiben 22a, 22c mittels einer Halteeinrichtung 26 im Ventilsteuerblockgehäuse 8 fest fixiert. Die Halteeinrichtung besteht, wie aus der Explosionsdarstellung ersichtlich, aus einem U-förmigen, an seinen beiden Schenkeln mit einer Rastnase 27 versehenen Halteteil 28, welches unter Wirkung einer Feder 29 in eine Einkerbung 30 der oberen und der unteren Keramikscheibe 22a, 22c eingreift. Die beiden äußeren Keramikscheiben werden dadurch bei einer Verschiebung der mittleren Scheibe im Gehäuse festgehalten. Der Rahmen 25 für die mittlere Keramikscheibe 22b ist mittels einer Druckfeder 31, die sich an einer im Ventilsteuerblock 8 fixierbaren Kappe 32 abstützt, in Richtung ihrer Längsachse gegen einen Anschlag gedrückt. Dies ist aus den Figuren 4 und 5 ersichtlich. Den Anschlag bildet ein Kolben 33 der Pneumatiksteuereinrichtung 16, der über das Magnetventil 15 mit Druckluft beaufschlagt werden kann.

Bei nicht benutztem Instrument steht die mittlere Keramikscheibe 22b in der in Figur 4 gezeichneten Stellung; sie ist durch den Druck der Feder 31 nach rechts geschoben. Der Kolben 33 befindet sich in seiner einen Endstellung. In dieser Position steht das Lochbild der mittleren Keramikscheibe 22b nicht in Deckung mit dem Lochbild der oberen und unteren Platte 22a, 22c. In dieser Position ist also der Durchfluß der Medien über die fünf Bohrungen (in Figuren 4 und 5 nur eine Bohrung ersichtlich) gesperrt. Erhält das Magnetventil 15 Betriebsspannung, z. B. im Falle einer Entnahme eines Instruments 5 aus seiner Ablage, so wird der Kolben 33 aus einer Druckluftleitung 34 über eine Dichtfläche 35 mit Druckluft beaufschlagt. Der Kolben 33 verschiebt sodann die mittlere Keramikscheibe 22b entgegen der Kraft der Feder 31 so weit, bis deren Lochbild mit dem Lochbild der anderen beiden Keramikscheiben zur Deckung kommt. In dieser Position (Figur 5) ist ein Durchströmen der Medien durch das Ventil, also von dem mit den Zuleitungen 11 oder 12 verbundenen Zuleitungskanal 36 im oberen Gehäuseteil 8a zu dem mit der Versorgungsleitung 4 des betreffenden Instruments verbundenen Ableitungskanal 37 im unteren Gehäuseteil 8b gegeben.

Die zur Steuerung der Kolben 33 notwendige Druckluft steht über die Leitungen 12, 14 und 34 an allen Pneumatiksteuereinrichtungen 16 gleichzeitig an; eine individuelle Auslösung erfolgt erst über ein elektrisches Steuersignal an den Magnetventilen 15. Dieses Signal kann über den Fußschalter 6 oder bei Entnahme eines Instruments aus seiner Ablage erzeugt werden.

Nachfolgend wird die Funktion des Kupplungskörpers 9 näher erläutert. Der Kupplungskörper 9 unterstützt die Servicefreundlichkeit der gesamten Ventilsteuereinrichtung; insbesondere lassen sich die angeschlossenen Funktionsbausteine sehr leicht ohne Zuhilfenahme von Werkzeugen trennen. Der Kupplungskörper 9 enthält ein Spritzteil (Grundkörper 40) mit mehreren, jeweils gleichen Bohrungen 41 für den Anschluß von Steckanschlußnippeln 42. Diese Steckanschlußnippel 42, welche mit den Zu- und Ableitungen für Luft und Wasser verbunden sind, können entweder einzeln oder auch zu mehreren auf einer gemeinsamen Leiste zusammengefügt an den Grundkörper 40 des Kupplungsstückes 9 angeschlossen werden. Zur Arretierung bzw. Fixierung der Anschlußnippel 42 ist eine Verriegelungskapsel 43 vorgesehen, die nach Einstecken der Steckanschlußnippel 42 in die entsprechenden Bohrungen 41 über den Grundkörper 40 geschoben wird. Gabelartig geformte Enden 44 halten die Nippel in ihrer Einsteckposition.

Der Grundkörper 40 enthält ferner eine zentrale Bohrung 45 zur Aufnahme eines Filters 46 und eines Filterträgers 47. Der Filterträger 47 enthält Verriegelungsnasen 48, die in entsprechend ausgebildete Gegenstücke 49 des Grundkörpers 40 eingreifen, wenn der Filterträger in die Bohrung 44 eingesetzt und bajonettartig verdreht wird. In dieser Position liegt ein an der Verriegelungskapsel 43 angeformter Lappen 43a in einer Aussparung 50 des Grundkörpers 40 und wird dort vom Filterträger 47 infolge der Bajonettverbindung 48, 49 gehalten. Durch den bajonettartigen Verschluß können nach Herausnehmen des Filterträgers und anschließendem Abziehen der Verriegelungskapsel sämtliche Steckanschlußnippel herausgenommen und damit die angeschlossenen Funktionsbausteine voneinander getrennt werden.

Anhand der Figur 6 wird der Weg der Treibluft für ein Turbinenhandinstrument näher erläutert. Über die Leitung A1 steht Druckluft im Verzweigungssystem 14 des oberen Ventilblockgehäuses 8a und damit auch an den Dichtflächen 34 der Magnetventile 15 an, ebenso an einem im unteren Ventilblockgehäuse 8b befindlichen pneumatischen Ventil 51. Sobald das Instrument 5 aus seiner Ablage genommen wird, gibt eine nicht näher erläuterte Geräteelektronik ein elektrisches Signal an das entsprechende Magnetventil 15. Wie vorstehend erläutert, wird dadurch über den Kolben 33 die mittlere Keramikscheibe 22c des zugehörigen Keramikventils 21 verschoben, wodurch der Treibluftweg geöffnet wird. Durch Niedertreten des mit 52 bezeichneten Fußschalterpedals wird ein mit ihm gekuppeltes weiteres Ventil 53 geöffnet, wodurch Steuerluft (A 2) das Ventil 51 öffnet. Die Treibluft kann nunmehr in den Versorgungsschlauch 4 des Instruments 5 strömen. Kurz vor Eintritt in den Schlauch 4 passiert die Luft noch ein Druckregelventil 54. Ein Regelknopf 55 auf der Unterseite des Ventilblockgehäuses 8b wirkt über eine Exzenterscheibe 56 auf eine Düsennadel 57. Damit kann der Druck der Treibluft auf einen vorgegebenen, durch ein Druckmanometer 58 angezeigten Wert eingestellt werden.

Die Steuerung der anderen Medien, wie chip blower-Luft, Spraywasser, erfolgt in ähnlicher Weise.

Aus der Darstellung ist ersichtlich, daß der gesamte Ventilsteuerblock ein sehr kompaktes Wege- und Ventilsystem beinhaltet, mit dem unnötige Leitungsverbindungen und Leitungswege, die zwangsläufig zu Druckverlusten führen und außerdem die Gefahr von Undichtigkeiten beinhalten, auf ein Minimum reduziert sind. Der Ventilblock enthält praktisch nur Anschlüsse für Zufuhr von Wasser und Luft sowie Steuermittel (Druckregler, Ventile, Verteilerkanäle) zur Verteilung der Medien zu den jeweiligen Instrumenten. Der separat angeordnete zentrale Kupplungskörper 9 erlaubt das schnelle Anschließen und Entfernen der Zu- und Ableitungen und ermöglicht so den raschen Austausch von Baugruppen. Dadurch, daß die Versorgungsschläuche 4 direkt an am Verteilerblock angeformten Anschlußelementen anschließbar sind, entfallen ebenfalls die sonst notwendigen Verbindungsleitungen zu den jeweiligen Ventilen. Dadurch, daß die Treibluft für druckluftbetriebene Instrumente nicht über den Fußschalter geleitet wird, sondern im Fußschalter nur ein pneumatisches Signal gebildet wird, das im Ventilsteuerblock verstärkt wird, wirken sich unterschiedliche Fußschalterkabellängen oder unterschiedliche Geräteadaptionen nicht nachteilig aus auf die für die luftbetriebenen Instrumente notwendigen Durchflußmengen.

Abschließend sei darauf hingewiesen, daß die aufgezeigte Längsbewegung der Keramikscheiben nicht zwingend erforderlich ist, daß es vielmehr denkbar und im Rahmen der Erfindung liegt, die Keramikscheiben so auszubilden, daß sie gegeneinander verdrehbar sind und ihr Lochbild bei Verdrehung zur Deckung gebracht wird. Ebenso ist es denkbar, anstelle der plattenförmigen ebenen Scheiben auch gekrümmte Oberflächen, z. B. zylindrische oder kugelige Oberflächen, aus keramischem Material vorzusehen, die mit entsprechend ausgebildeten Gegenflächen in der beschriebenen Weise zusammenwirken, wobei auch hier dann die Abdichtung zwischen den Keramikteilen allein durch die Gleitflächen gegeben ist. Die Anwendung ist nicht auf den beschriebenen Ventilblock beschränkt, so ist wegen der sehr kleinen Abmessungen, die solche Keramikschieber-Ventile brauchen, auch ein direkter Einbau in einen Fußschalter oder sogar in ein zahnärztliches Handstück denkbar.

## Patentansprüche

1. Ventilsteuereinrichtung für ein zahnärztliches Gerät zum gleichzeitigen Steuern mehrerer fluider Medien, enthaltend mindestens ein Ventil (21), welches wenigstens einen ortsfesten, mit Zu- und Ableitungen (11, 12, 36, 37) der Medien sowie gegebenenfalls mit Steuerleitungen verbundenen Grundkörper (22) und einen demgegenüber verstellbar angeordneten, wenigstens einen quer zur Verstellebene verlaufenden Durchgangskanal (23) aufweisenden Stellkörper (22b) enthält, der mittels einer Stelleinrichtung derart verstellbar ist, daß der Durchgangskanal (23) des Stellkörpers (22b) in bezug auf die Kanalöffnungen (36, 37) des Grundkörpers so zu liegen kommt, daß in wenigstens einer Stellung wenigstens ein Medienzu- und -ableitungskanal des Grundkörpers mit dem Durchgangskanal des Stellkörpers zur Deckung und in einer anderen Stellung nicht zur Deckung gebracht werden kann, dadurch gekennzeichnet, daß Grundkörper (22) und Stellkörper (22b) aus flachen, in der Draufsicht im wesentlichen rechteckigen Plättchen (22a bis 22c) bestehen, die sandwichartig übereinander angeordnet sind, wobei das den Stellkörper bildende mittlere Plättchen (22b) in Richtung seiner Längsachse gegenüber den anderen ortsfesten Plättchen verstellbar angeordnet ist, daß die Plättchen (22a bis 22c) hochfeine Gleitflächen aus keramischem Material aufweisen, mit denen sie aneinanderliegen und daß die Plättchen (22a bis 22c) jeweils mehrere Kanäle (23, 36, 37) aufweisen, von denen die des mittleren Plättchens (22b) Durchgangskanäle sind, die in bezug auf die Kanalöffnungen der ortsfesten Plättchen (22a, 22c) in die eine oder andere Stellung bringbar sind.

2. Ventilsteuereinrichtung nach Anspruch 1, dadurch gekennzeichnet, daß die Plättchen (22b bis 22c) mehrere, vorzugsweise fünf verteilt angeordnete und gegeneinander abgedichtete Öffnungen bzw. Durchgangskanäle (23) mit jeweils gleichem Lochbild aufweisen.

3. Ventilsteuereinrichtung nach Anspruch 1, dadurch gekennzeichnet, daß die Plättchen (22a bis 22c) formgleich ausgebildet sind.

4. Ventilsteuereinrichtung nach Anspruch 1, dadurch gekennzeichnet, daß die Plättchen (22 bis 22c) vollständig aus keramischem Material bestehen.

5. Ventilsteuereinrichtung nach Anspruch 1, dadurch gekennzeichnet, daß das mittlere Plättchen (22b) in einem Rahmen (25) gefaßt ist, der durch eine Feder (31) belastet in einer ersten Stellung (Figur 4) gehalten ist und durch entgegen der Feder wirkende verstellmittel (15, 16) in eine zweite Stellung (Figur 5) gebracht werden kann, wobei in der einen Stellung (Figur 5) ein Mediendurchfluß durch das mittlere Plättchen (22b) gegeben und in der anderen Stellung (Figur 4) dieser Durchfluß gesperrt ist.

6. Ventilsteuereinrichtung nach Anspruch 5, dadurch gekennzeichnet, daß die Plättchen (22a, 22c) in einer Nut (20) eines Ventilsteuerblockgehäuses (8) angeordnet sind wobei die beiden äußeren Plättchen (22a, 22c) durch eine gemeinsame Halteeinrichtung (26), welche ein Halteteil (28) mit in Einkerbungen (3) der Plättchen (22a, 22c) formschlüssig eingreifenden Vorsprüngen (27) enthält, im Ventilsteuerblockgehäuse (8) gehalten sind.

7. Ventilsteuereinrichtung nach Anspruch 1, dadurch gekennzeichnet, daß als Verstellmittel für das mittlere Plättchen (22b) ein mit Druckluft beaufschlagter Kolben (33) vorgesehen ist.

8. Ventilsteuereinrichtung nach Anspruch 1, dadurch gekennzeichnet, daß die Plättchen (22a bis 22c) zwischen einem oberen (8a) und einem unteren Gehäuseteil (8b), welche die Medienzu- und -ableitungskanäle (14, 36; 37) enthalten, eingebettet sind, wobei die Öffnungen der oberen (22a) und unteren (22c) Plättchen unter Zwischenlage von federnden Dichtungen (24) mit den korrespondierenden Öffnungen der Zu- und Ableitungen (36,.37) in den beiden Gehäuseteilen (8a, 8b) verbunden sind.

9. Ventilsteuereinrichtung nach Anspruch 1, dadurch gekennzeichnet, daß mehrere Ventile (21) in einem Ventilsteuerblock (8) zusammengefaßt sind.

10. Ventilsteuereinrichtung nach Anspruch 9, dadurch gekennzeichnet, daß zur Steuerung verschiedener Medien für mehrere zahnärztliche Instrumente (5) ein gemeinsames Eingangssteuerventil und für jedes Instrument (5) je ein Ausgangssteuerventil vorgesehen sind.

11. Ventilsteuereinrichtung nach Anspruch 10, dadurch gekennzeichnet, daß in einem oberen Ventilblockgehäuseteil (8a) die Anschlüsse (11, 12) für die Zufuhr der Medien sowie Magnetventile (15) zur Steuerung einer Pneumatiksteuereinrichtung (16) für die Steuerventile (21) und in einem unteren Ventilblockgehäuseteil (8b) Schlauchanschlüsse (17) für den Anschluß der zu den Instrumenten (5) führenden Versorgungsleitungen (4) vorgesehen sind.

12. Ventilsteuereinrichtung nach Anspruch 11, dadurch gekennzeichnet, daß ein für die unterschiedlichen Medien (Luft/Wasser) gemeinsames Kupplungsstück (40) vorhanden ist, an welchem mittels jeweils gleichartig ausgebildeten Steckanschlußnippeln (42) einerseits die Zu- und andererseits die Ableitungen (A1, A2, W1; W2 bis W6) anschließbar sind und daß eine für zumindest mehrere, vorzugsweise für sämtliche Steckanschlußnippel (42) gemeinsame Verriegelungskapsel (43) vorhanden ist, welche nach Einstecken der Nippel (42) in entsprechende Kanäle (41) des Kupplungsstückes (40) durch Überschieben die Steckanschlußnippel (42) in ihrer Einsteckposition fixiert.

13. Ventilsteuereinrichtung nach Anspruch 12, dadurch gekennzeichnet, daß das Kupplungsstück (40) einen Filterträger (47) enthält, der bajonettartig mit Gegengliedern (49) am Kupplungsstück (40) in Eingriff bringbare Verriegelungselemente (48) enthält, durch die die Verriegelungskapsel (43) in der Einsteckposition gehalten wird.

**Claims**

1. Valve control system for a dental apparatus for simultaneous control of several fluid agents, containing at least one valve (21), which contains at least one fixed base body (22) connected to inlet and outlet lines (11, 12, 36, 37) for the agents, and also possibly to control lines, and an adjusting body (22b) arranged so that it is adjustable relative to this, having at least one passage channel (23) extending transverse to the adjusting plane, said adjusting body capable of being adjusted by means of an adjusting device in such a way that the passage channel (23) of the adjusting body (22b), in relation to the channel openings (36, 37) of the base body come to lie so that in at least one position at least one agent inlet and outlet channel of the base body can be brought to coincide with the passage channel of the adjusting body and in another position cannot coincide,
characterised in that,
base bodies (22) and adjusting bodies (22b) consist of flat small plates (22a to 22c) substantially rectangular viewed from the top, which are arranged over each other like a sandwich, whereby the middle small plate (22b) forming the adjusting body is arranged so that it can be adjusted in the direction of its longitudinal axis compared with the other fixed small plates, in that the small plates (22a to 22c) have very fine sliding surfaces of ceramic material, with which they lie on each other, and in that the small plates (22a to 22c) have in each case several channels (23, 36, 37), of which those channels are passage channels of the middle small plate (22b), which, in relation to the channel openings of the fixed small plates (22a, 22c) are able to be brought into one or the other position.

2. Valve control system according to claim 1, characterised in that the small plates (22a to 22c) have several, preferably five openings or passage channels (23), arranged so that they are distributed and sealed against each other, with in each case an equal hole pattern.

3. Valve control system according to claim 1, characterised in that the small plates (22a to 22c) are constructed in the same way.

4. Valve control system according to claim 1, characterised in that the small plates (22a to 22c) are made completely of a ceramic material.

5. Valve control system according to claim 1, characterised in that the middle small plate (22b) is accommodated in a frame (25), which is held loaded by a spring (31) in a first position (figure 4) and can be brought into a second position (figure 5) by adjusting means (15, 16) acting against the spring, whereby in the one position (figure 5) a throughflow of the agent is yielded by the middle small plate (22b) and in the other position (figure 4) this throughflow is blocked.

6. Valve control system according to claim 5, characterised in that the small plates (22a, 22c) are arranged in a groove (20) of a valve control block housing (8), whereby both outer small plates (22a, 22c) are held in the valve control blocking housing (8) by a common holding device (26), which contains a holding part (28) with projections (27) engaging in a formlocking manner in the indentations (3) of the small plates (22a, 22c).

7. Valve control system according to claim 1, characterised in that as adjusting means for the middle plate (22b) a piston (33) acted upon by compressed air is provided.

8. Valve control system according to claim 1, characterised in that the small plates (22a to 22c) are bedded between an upper (8a) and a lower housing part (8b) which contain the agent inlet and outlet channels (14, 36; 37), whereby the openings of the upper (22a) and lower (22c) small plates under an intermediate layer of flexible seals (24) are connected with the corresponding openings of the inlets and outlets (36, 37) in both housing parts (8a, 8b).

9. Valve control system according to claim 1, characterised in that several valves (21) are assembled in a valve control block (8).

10. Valve control system according to claim 9, characterised in that for controlling different agents for several dental instruments (5) there is provided a common input control valve and for each instrument (5) an output control valve.

11. Valve control system according to claim 10, characterised in that provided in one upper valve block housing part (8a) there are attachments (11, 12) for the supply of agents as well as solenoid valves (15) for controlling a pneumatic control device (16) for the control valves (21) and provided in a lower valve block housing part (8b) tube attachments (17) for the connection of the provision lines (4) leading to the instruments (5).

12. Valve control system according to claim 11, characterised in that a common coupling (40) for the different agents (air/water) is provided, on which by means of in each case similarly constructed plug connection nipples (42), on the one hand the inlet lines and, on the other hand, the outlet lines (A1, A2, W1; W2 to W6) are capable of being joined and in that a common locking capsule (43) is present for at least several, preferably all the plug connection nipples (42), said capsule locking the plug connection nipples (42) in their position by slipping over once the nipples (42) are inserted into corresponding channels (41) of the coupling (40).

13. Valve control system according to claim 12, characterised in that the coupling (40) contains a filter bracket (47), which contains like a bayonet locking elements (48) capable of engaging with counter members (49) on the coupling (40), through which members the locking capsule (43) is held in the plugging-in position.

**Revendications**

1. Dispositif de commande à soupapes pour un appareil de dentisterie, pour la commande simultanée de plusieurs milieux fluides, comportant au moins une soupape (21), qui contient un corps de base fixe (22) relié à des conduites d'amenée et d'évacuation (11, 12, 36, 37) des milieux ainsi que, éventuellement, à des conduites de commande, et un corps réglable (22b), qui est disposé de manière à être déplacable par rapport au corps de base, comporte au moins un canal traversant (23) disposé transversalement par rapport au plan de déplacement et est déplacable à l'aide d'un dispositif de réglage de telle sorte que le canal traversant (23) du corps réglable (22b) vient se placer par rapport aux ouvertures (36, 37) du canal du corps de base, de telle sorte que, dans au moins une première position, au moins un canal d'amenée et d'évacuation d'un fluide, ménagé dans le corps de base peut être aligné avec le canal traversant du corps réglable et, dans une autre position, il ne peut pas être aligné avec ce canal, caractérisé par le fait que le corps de base (22) et le corps réglable (22b) sont constitués par des plaquettes plates (22a à 22c), possédant une forme sensiblement rectangulaire selon une vue en plan et superposées selon une disposition en sandwich, auquel cas la plaquette médiane (22b) constituant le corps réglable est disposée de manière à être déplaçable dans la direction de son axe longitudinal par rapport aux autres plaquettes fixes, que les plaquettes (22a à 22c) possèdent des surfaces de glissement extrêmement lisses, réalisées en un matériau céramique et à l'aide desquelles elles s'appliquent les unes contre les autres, et que les plaquettes (22a à 22c) possèdent plusieurs canaux respectifs (23, 36, 37), parmi lesquels les canaux de la plaquette médiane (22b) sont des canaux traversants qui peuvent être amenés dans la première position ou l'autre position par rapport aux ouvertures des canaux des plaquettes fixes (22a, 22c).

2. Dispositif de commande à soupapes suivant la revendication 1, caractérisé par le fait que les plaquettes (22a à 22c) comportent plusieurs, de préférence cinq, ouvertures ou canaux traversants (23) répartis, étanchéifiés les uns par rapport aux autres, et comportant respectivement la même configuration de trous.

3. Dispositif de commande à soupapes suivant la revendication 1, caractérisé par le fait que les plaquettes (22a à 22c) possèdent des formes identiques.

4. Dispositif de commande à soupape suivant la revendication 1, caractérisé par le fait que les plaquettes (22a à 22c) sont réalisées entièrement en un matériau céramique.

5. Dispositif de commande à soupapes suivant la revendication 1, caractérisé par le fait que la plaquette médiane (22b) est montée dans un cadre (25), qui est maintenu dans une première position (figure 4) sous la charge exercée par un ressort (31) et peut être amenée dans une seconde position (figure 5) par l'intermédiaire de moyens de déplacement (15, 16) agissant à l'encontre du ressort auquel cas une traversée de la plaque médiane (22b) par un fluide est possible dans la première position (figure 5), tandis que cette traversée est bloquée dans l'autre position (figure 4).

6. Dispositif de commande à soupapes suivant la revendication 5, caractérisé par le fait que les plaquettes (22a, 22c) sont disposées dans une rainure (20) d'un logement (8) pour un bloc de commande à soupapes, les deux plaquettes extérieures (22a, 22c) étant retenues dans le logement (8) du bloc de commande à soupapes par un dispositif commun de maintien (26), qui contient une partie de retenue (28) munie de parties saillantes (27) s'engageant selon une liaison par formes complémentaires dans des encoches (3) des plaquettes (22a, 22c).

7. Dispositif de commande à soupapes selon la revendication 1, caractérisé par le fait qu'il est prévu, comme moyen de déplacement pour la plaquette médiane (22b), un piston (33) chargé par de l'air comprimé.

8. Dispositif de commande à soupapes selon la revendication 1, caractérisé par le fait que les plaquettes (22a à 22c) sont insérées entre un élément supérieur (8a) du logement et un élément inférieur (8) du logement, qui contiennent les canaux (14, 36, 37) d'amenée et d'évacuation des fluides, les ouvertures de la plaquette supérieure (22a) et de la plaquette inférieure (22c) étant réunies, moyennant l'interposition de garnitures d'étanchéité élastiques (24), aux ouvertures correspondantes des conduites d'amenée et d'évacuation (36, 37) situées dans les deux éléments de boîtier (8a, 8b).

9. Dispositif de commande à soupapes suivant la revendication 1, caractérisé par le fait que plusieurs soupapes (21) sont réunies dans un bloc (8) de commande à soupapes.

10. Dispositif de commande à soupapes suivant la revendication 9, caractérisé par le fait que pour la commande de différents milieux pour différents instruments de dentisterie (5), il est prévu une soupape commune de commande d'entrée et pour chaque instrument (5) il est prévu une soupape respective de commande de sortie.

11. Dispositif de commande à soupapes suivant la revendication 10, caractérisé par le fait que les raccords (11, 12) pour l'amenée des milieux ainsi que des soupapes électromagnétiques (15) servant à commander un dispositif de commande pneumatique (16) prévu pour les soupapes de commande (21) sont prévues dans une partie supérieure (8a) du logement du bloc à soupapes, et que des raccords de tuyaux (17) pour le raccordement des conduites d'alimentation (4) aboutissant aux instruments (5) sont prévus dans une partie inférieure (8b) du logement du bloc à soupapes.

12. Dispositif de commande à soupapes suivant la revendication 11, caractérisé par le fait qu'il est prévu un organe d'accouplement (40) commun pour les différents milieux (air/eau), auquel d'une part les conduites d'amenée et d'autre part les conduites d'évacuation (A1, A2, W1; W2 à W6) peuvent être raccordées par l'intermédiaire de raccords filetés enfichables (42) respectifs agencés de la même manière et qu'il est prévu une capsule de verrouillage (43) commune à au moins plusieurs et de préférence à tous les raccords filetés enfichables (42) et qui, après enfichage des raccords filetés enfichables (42) dans des canaux correspondants (41) de l'organe d'accouplement (40), fixe les raccords dans leur position enfichée, lors de la mise en place de la capsule par-dessus ces raccords.

13. Dispositif de commande à soupapes suivant la revendication 12, caractérisé par le fait que l'organe d'accouplement (40) contient un support de filtre (47), contenant des organes de verrouillage (48), qui peuvent être amenés en prise, selon une liaison du type à baïonnette, avec des organes antagonistes (49) prévus sur l'organe d'accouplement (40) et à l'aide desquels la capsule de verrouillage (43) est maintenue dans la position enfichée.

FIG 1

EP 0 187 222 B1

FIG 2

FIG 4

FIG 5

FIG 3

FIG 6